Europäisches Patentamt

European Patent Office

Office européen des brevets

(19)

(11) Veröffentlichungsnummer: **0 371 381**
**A2**

(12) **EUROPÄISCHE PATENTANMELDUNG**

(21) Anmeldenummer: 89121541.0

(22) Anmeldetag: 21.11.89

(51) Int. Cl.⁵: **A61C 19/00, F21V 9/00**

(30) Priorität: 30.11.88 DE 8814929 U

(43) Veröffentlichungstag der Anmeldung:
06.06.90 Patentblatt 90/23

(84) Benannte Vertragsstaaten:
AT CH DE FR GB LI

(71) Anmelder: ESPE Stiftung & Co Produktions-
und Vertriebs KG
Am Griesberg 2
D-8031 Seefeld(DE)

(72) Erfinder: Herold, Wolf-Dietrich, Dr.-Ing.
Höhenweg 13
D-8031 Seefeld 2(DE)
Erfinder: Koran, Peter, Dr.
Tassiloring 7
D-8120 Weilheim(DE)

(74) Vertreter: Strehl, Schübel-Hopf, Groening
Maximilianstrasse 54 Postfach 22 14 55
D-8000 München 22(DE)

(54) Filtereinrichtung für ein Bestrahlungsgerät.

(57) Zum Ein- und Ausschalten eines Filters in den bzw. aus dem Strahlengang eines insbesondere für Dentalzwecke dienenden Bestrahlungsgeräts ist ein Zwischenstück (12) zwischen das Bestrahlungs-Handgerät (10) und einen Lichtleiter (11) eingefügt. In dem Zwischenstück (12) ist ein mit einem Filter versehener Schieber in einer zum Strahlengang senkrecht verlaufenden Ebene verschiebbar gelagert. Der Schieber läßt sich durch einen Griffteil (19) während der Benutzung der Gerätes, etwa mit dem Zeigefinger der das Gerät haltenden Hand, betätigen. Das Zwischenstück (12) ist mit seinem in die Lichtleiter-Aufnahme (14) des Handgeräts (10) einführbaren Einsteckende (13) sowie mit seinem Aufnahmeende (16) für den Lichtleiter (11) so gestaltet, daß es eine Nachrüstung bereits vorhandener Bestrahlungsgeräte gestattet.

FIG.1

## FILTEREINRICHTUNG FÜR EIN BESTRAHLUNGSGERÄT

Eine Filtereinrichtung für ein Bestrahlungsgerät mit den im ersten Teil des Anspruchs 1 angegebenen Merkmalen ist aus DE-A-2 846 471 bekannt. Bei dem bekannten Gerät wird die von einer Lichtquelle ausgehende Strahlung durch einen konkaven Reflektor auf das in das Gehäuse hineinragende Strahleintrittsende eines Lichtleiters fokussiert und in diesem an den Bestrahlungsort geleitet. In einem im vorderen Teil des Gerätegehäuses zwischen Lichtquelle und Lichtleiter geführten Schieber ist ein Absorbtionsfilter angeordnet, das sich in einer Endstellung des Schiebers im Strahlengang befindet, während in der anderen Endstellung das Licht eine leere Öffnung des Schiebers durchsetzt. Das bekannte Bestrahlungsgerät gestattet es, durch Verschieben des Schiebers das Filter bei Bedarf ein- und auszuschalten, und eignet sich daher insbesondere für Arbeiten im Dentalbereich.

In Dentallabors sind andererseits verschiedene Bestrahlungsgeräte im Einsatz, die ein fest eingebautes Absorptionsfilter aufweisen, um unerwünschte Spektralteile vom Behandlungsort abzuhalten. Mit diesen Geräten ist es aber nicht möglich, Arbeiten ohne Filter oder mit einem anderen Filter durchzuführen.

Der Erfindung liegt die Aufgabe zugrunde, eine Filtereinrichtung vorzusehen, mit der sich ein vorhandenes Bestrahlungsgerät ohne weiteres nachrüsten läßt und die ein einfaches Ein- und Ausschalten eines Filters oder auch einen Wechsel zweier Filter während des Betriebs des Bestrahlungsgerätes gestattet.

Die erfindungsgemäße Lösung dieser Aufgabe ist im Kennzeichenteil des Anspruchs 1 angegeben. Danach ist die Filtereinrichtung als ein zwischen die Gehäuseaufnahme und das Strahleintrittsende des Lichtleiters einfügbares Zwischenstück ausgebildet, in dem das Filter quer zur Strahlrichtung bewegbar angeordnet ist.

Vorteilhafte Weiterbildungen der Erfindung sind in den Unteransprüchen gekennzeichnet. Dabei sorgt die nach Anspruch 2 vorgesehen Vorspannfeder, daß der Schieber jeweils in eine Endstellung gelangt, in der eine definierte Abstrahlung erfolgt. Die Merkmale des Ansprüche 2 bis 4 dienen ferner der einfachen Handhabung des Gerätes, wobei sich die Ansprüche 2 und 3 auf die Möglichkeit einer Betätigung des Schiebers mit einem Finger, z.B. dem Zeigefinger, der das Bestrahlungsgerät haltenden Hand beziehen und die Weiterbildung der Erfindung nach Anspruch 4 die Möglichkeit eröffnet, die Filtereinrichtung in eine für Einhandbedienung möglichst geeignete Stellung zu drehen. Die Ansprüche 5 und 6 vermitteln ferner eine sichtbare Anzeige zur Gewährleistung, daß der Schieber vollständig eingeschoben und das Filter im wesentlichen vollständig im Strahlengang steht.

Ein bevorzugtes Ausführungsbeispiel der Erfindung wird nachstehend anhand der Zeichnungen näher erläutert. Darin zeigt

Figur 1 eine teilweise geschnittene Seitenansicht eines Bestrahlungsgeräts mit Filtereinrichtung,

Figur 2 eine Schnittdarstellung der Filtereinrichtung, und

Figur 3 eine Frontansicht des in der Filtereinrichtung vorhandenen Schiebers.

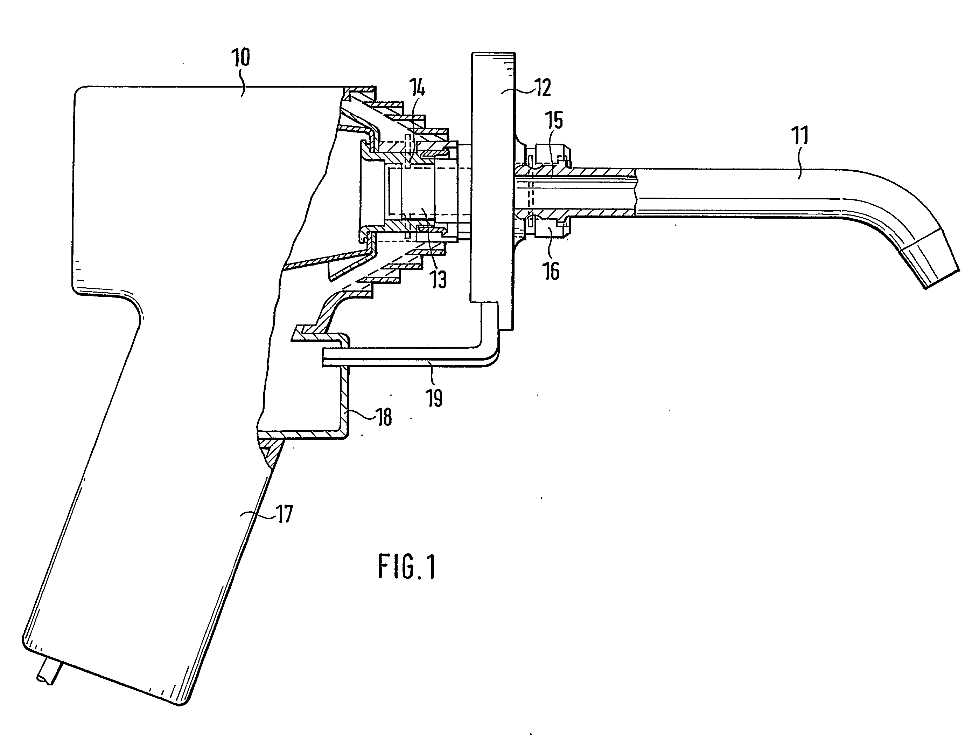

Das in Figur 1 gezeigte Bestrahlungsgerät, das insbesondere für Bestrahlungen zum Aushärten von Zahnfüllungen in situ bestimmt ist, besteht aus einem eine Strahlungsquelle enthaltenden Handgerät 10, einem Lichtleiter 11 und einem zwischen Handgerät und Lichtleiter eingeschalteten Filter-Zwischenstück 12.

Das Zwischenstück 12 ist mit einem Einsteckende 13 in eine Aufnahme 14 des Gehäuses des Handgeräts 10 eingeführt, während der Lichtleiter 11 mit seinem Strahleintrittsende 15 in das dem Einsteckende 13 gegenüberliegende Aufnahmeende 16 des Zwischenstücks 12 eingesteckt ist. Das Einsteckende 13 des Zwischenstücks 12 stimmt in seiner äußeren Form mit dem Strahleintrittsende 15 des Lichtleiters 11 überein; ebenso entspricht das Aufnahmeende 16 des Zwischenstücks 12 in seiner inneren Form der Aufnahme 14 des Handgeräts 10. Aus diesem Grund läßt sich das Zwischenstück in Verbindung mit bereits vorhandenen Bestrahlungsgeräten verwenden.

In Figur 1 ist ferner gezeigt, daß das Handgerät 10 einen schräg nach unten verlaufenden Griff 17 aufweist, an dem ein mit einem Finger (z.B. dem Mittelfinger) der haltenden Hand zu bedienender Einschaltknopf 18 für die Strahlungsquelle vorgesehen ist. Das Filter-Zwischenstück 12 ist, wie im folgenden näher erläutert werden soll, mit einem Schieber versehen, der in einer zum Strahlengang senkrechten Ebene verschiebbar ist und mit einem Griffteil 19 aus dem Zwischenstück herausragt. Der Griffteil 19 ist gegenüber der Schieberichtung senkrecht und damit in Richtung des Griffs 17 des Handgeräts 10 abgewinkelt. Wie aus Figur 1 ersichtlich, ragt der Griffteil 19 des Zwischenstücks 12 so weit neben den Griff 17 des Handgeräts 10, daß er z.B. mit dem Zeigefinger der das Handgerät 10 haltenden Hand betätigt werden kann.

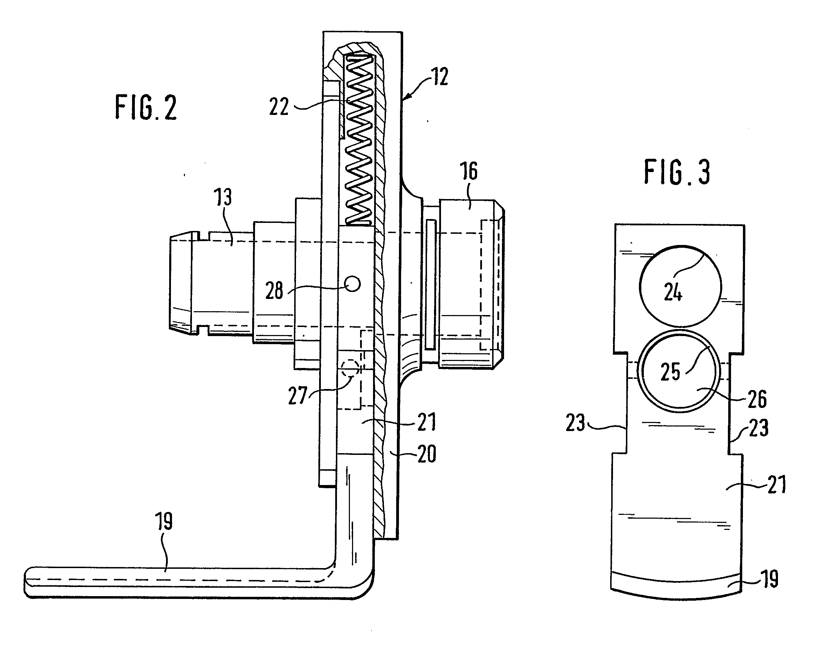

Wie aus Figur 2 hervorgeht, ist der zwischen dem Einsteckende 13 und dem Aufnahmeende 16 gelegene mittlere Teil des Filter-Zwischenstücks 12 als Schiebeführung 20 ausgebildet, in der ein Schieber 21 gegen die Kraft einer zwischen seinem inneren Ende und dem inneren Ende der Schiebeführung 20 angeordneten Druckfeder 22 verschiebbar geführt ist.

Die Schiebeführung 20 mit dem Schieber 21 ist gegenüber dem Einsteckende 13 und dem Aufnahmeende 16 des Zwischenstücks 12 um eine mit der Strahlrichtung fluchtende Achse drehbar, damit sich der Benutzer den Griffteil 19 in eine für die Handhabung bequeme Position verschwenken kann.

Der insgesamt plattenförmige Schieber 21 ist gemäß Figur 3 an seinen beiden Längskanten mit rechteckigen Aussparungen 23 versehen, die die beiden Endstellungen des Schiebers 21 definieren. In der in Figur 2 gezeigten, durch die Kraft der Druckfeder 22 erreichten äußeren Endstellung des Schiebers 21 befindet sich eine freie Öffnung 24 in Fluchtung mit dem Strahlengang. Wird der Schieber 21 gegen die Kraft der Feder 22 in seine andere Endstellung eingeschoben, so befindet sich ein in eine zweite Öffnung 25 des Schiebers 21 eingesetztes Filter 26 im Strahlengang.

In der beschriebenen zweiten Endstellung fluchtet ferner eine im Schieber 21 vorgesehene, in der Ebene des Filters 26 gelegene und senkrecht zur Schieberichtung sowie senkrecht zum Strahlengang verlaufende Durchgangsbohrung 27 mit einer weiteren, in der Schiebeführung 20 vorgesehenen Durchgangsbohrung 28.

Am äußeren Ende der Durchgangsbohrung 28 ist ein aus durchsichtigem Kunststoff bestehendes, aus dem Zwischenstück 12 nach außen ragendes, etwa halbkugelförmiges Diffusorelement angebracht. Ist die in dem Handgerät 10 vorhandene Strahlungsquelle eingeschaltet und der Schieber 21 in die besagte zweite Endstellung eingeschoben, so daß sich das Filter 26 im Strahlengang befindet, so durchsetzt ein Teil des in dem Filter 26 gestreuten Lichts die miteinander fluchtenden Durchgangsbohrungen 27 und 28 und tritt durch das Diffusorelement nach außen. Damit wird eine sichtbare Anzeige vermittelt, daß der Schieber in seine Endstellung eingeschoben ist.

Ist der Schieber nicht vollständig eingeschoben, so gelangt aufgrund der noch nicht vorhandenen oder geringeren Überlappung der beiden Durchgangsbohrungen 27, 28 kein oder nur ein entsprechend kleinerer Anteil der Strahlung nach außen, so daß eine Anzeige nicht vorhanden bzw. entsprechend schwächer ist. Bei dem gezeigten Ausführungsbeispiel ist die geometrische Anordnung so getroffen, daß sich bei unvollständigem Einschieben, bei dem gerade noch kein Licht die Durchgangsbohrung 28 durchsetzt, das Filter 26 erst zu etwa 70 % im Strahlengang befindet.

**Ansprüche**

1. Filtereinrichtung für ein Bestrahlungsgerät, bei dem innerhalb des Gerätegehäuses vor dem in eine Gehäuseaufnahme (14) einsteckbaren Strahleintrittsende (15) eines Lichtleiters (11) ein Filter (26) vorgesehen ist, das in einer quer zur Strahlrichtung verlaufenden Ebene zwischen einer ersten Stellung, in. der es sich außerhalb des Strahlengangs befindet, und einer zweiten Stellung, in der es sich im Strahlengang befindet, bewegbar ist, dadurch gekennzeichnet, daß das Filter (26) in einem Zwischenstück (12) bewegbar angeordnet ist, das ein in die Gehäuseaufnahme (14) einführbares Einsteckende (13) sowie ein Aufnahmeende (16) für den Lichtleiter (11) aufweist.

2. Einrichtung nach Anspruch 1, dadurch gekennzeichnet, daß das Filte (26) gegen die Kraft einer Vorspannfeder (22) aus der ersten Stellung in die zweite Stellung verschiebbar ist.

3. Einrichtung nach Anspruch 2, dadurch gekennzeichnet, daß an der von der zweiten Stellung entfernten Seite des Filters (26) ein Griffteil (19) vorgesehen ist, der in Richtung des Gehäuses (10) abgewinkelt ist.

4. Einrichtung nach einem der Ansprüch 1 bis 3, dadurch gekennzeichnet, daß das Zwischenstück (12) eine Schiebeführung (20) aufweist und das Filter (26) in einem darin geführten Schieber (21) angeordnet ist, und daß die Schiebeführung (20) samt Schieber (21) um eine mit der Strahlrichtung fluchtende Achse drehbar ist.

5. Einrichtung nach Anspruch 4, dadurch gekennzeichnet, daß der Schieber (21) und die Schiebeführung (20) in der Ebene des Filters (26) jeweils eine quer zur Strahlrichtung und quer zur Schieberichtung verlaufende Durchgangsbohrung (27, 28) aufweisen, und daß die beiden Bohrungen (27, 28) so angeordnet sind, daß sie in der zweiten Stellung des Schiebers (21) miteinander fluchten.

6. Einrichtung nach Anspruch 5, gekennzeichnet durch ein an der Außenseite der Schiebeführung (20) im Bereich der Bohrung (28) herausragendes Diffusorelement.

FIG.1

**FIG.2**

**FIG.3**

EP 0 371 381 A2